# EUROPÄISCHE PATENTSCHRIFT

(11) **EP 3 724 524 B1**
(45) Veröffentlichungstag und Bekanntmachung des Hinweises auf die Patenterteilung: **23.02.2022**
(21) Anmeldenummer: 17832731.8
(22) Anmeldetag: 13.12.2017
(51) Int. Cl.: F16B 39/10, F16L 23/00

(54) **FIXIEREINRICHTUNG FÜR VERBINDUNGSMITTEL MIT EINEM MEHRKANTKOPF**
FIXING DEVICE FOR CONNECTING MEANS HAVING A POLYGONAL HEAD
DISPOSITIF DE FIXATION POUR MOYENS DE LIAISON AVEC UNE TÊTE POLYGONALE

(43) Veröffentlichungstag der Anmeldung: 21.10.2020
(73) Patentinhaber: Bettray, Ole, 26419 Schortens (DE)
(72) Erfinder: Bettray, Ole, 26419 Schortens (DE)
(74) Vertreter: Limbeck, Achim
(86) Internationale Anmeldenummer: PCT/DE2017/101070
(87) Internationale Veröffentlichungsnummer: WO 2019/114847

(56) Entgegenhaltungen:
- WO-A1-2017/137021
- JP-U- S57 136 016

## Beschreibung

### Technisches Gebiet

Die vorliegende Erfindung betrifft eine Fixiereinrichtung für Verbindungsmittel mit einem Mehrkantkopf zur lösbaren Verbindung von Flanschen oder dergleichen gearteten Verbindungsteilen gemäß dem Obersatz des Anspruchs 1.

### Stand der Technik

Aus der Druckschrift DE 672 705 A ist ein Sicherungsring bekannt, der die Mutternschrauben, die Nabe und die Felgenscheibe an Autorädern verbindet und sichert und aus mehreren die Muttern umfassenden Platten besteht, wobei die die Platten durch Zugfedern unter Spannung verbunden sind.

Die US 2 758 628 A zeigt weiterhin Mittel zum Zurückhalten der retrograden Drehung einer kreisförmigen Reihe von polygonalen Radhaltevorsprüngen, die eine Vielzahl von Klammergliedern aufweisen, die gleich der Anzahl der Laschen sind, wobei jedes Klammerelement eine flache Basis und ein Paar von beabstandeten parallelen Flanschen aufweist, wobei eine Öffnung zwischen den Flanschen vorgesehen ist und die Wand, die die Öffnung umgibt, Kerben umfasst, um Winkelabschnitte des jeweiligen Ansatzes aufzunehmen.

Aus der US 4 133 583 A ist eine Fahrzeugrad- und Verkleidungsbaugruppe bekannt, die ein Verkleidungsteil aufweist, das in einer vorgewählten symmetrischen Beziehung zu dem Fahrzeugrad durch ein Halteelement an dem Verkleidungsteil positioniert ist, das in Haltenuten eingreift, die in den Muttern ausgebildet sind, die verwendet werden, um das Fahrzeugrad an seiner Nabe zu halten. Das Halteelement weist eine Führungseinrichtung auf, die mit den Muttern in Eingriff steht, um eine Befestigung der Verkleidung an dem Rad zu verhindern.

Überdies ist aus der Druckschrift CN 102 554 869 B eine Fixiereinrichtung der eingangs genannten Art dadurch gekennzeichnet, dass es ein die Mantelfläche der Mehrkantköpfe mehrerer Verbindungsmittel zumindest bereichsweise formschlüssig umfassendes und die Rotation dieser Verbindungsmittel hemmendes Fixierungsmittel umfasst. Dieses Fixierungsmittel ist dabei als Kette ausgebildet und umfasst mehrere beabstandete Glieder mit jeweils mindestens einer Aufnahme, dessen Innenprofil der Mantelfläche der Mehrkantköpfe entsprechend korrespondierend ausgebildet ist, wobei das Innenprofil einzelner Glieder der Kette zum formschlüssigen, bereichsweise Umfassen der Mantelfläche der Mehrkantköpfe ausgebildet ist. Das Fixierungsmittel umfasst dabei mindestens ein reversibles Verbindungsmittel zum widerlösbaren Zusammenfügen zweier Enden des Fixierungsmittels.

Weiterhin ist aus der WO 2017137021 A1 eine Fixiereinrichtung für Verbindungsmittel mit einem Mehrkantkopf zur lösbaren Verbindung von Flanschen, welche durch eine Schraubverbindung miteinander verbindbar und gegeneinander verspannbar sind, wobei die Fixiereinrichtung ein die Mantelfläche der Mehrkantköpfe mehrerer Verbindungsmittel zumindest bereichsweise formschlüssig umfassendes und die Rotation dieser Verbindungsmittel hemmendes Fixierungsmittel umfasst und das Fixierungsmittel mehrere beabstandete Glieder mit jeweils mindestens einer Aufnahme umfasst, dessen Innenprofil der Mantelfläche der Mehrkantköpfe entsprechend korrespondierend ausgebildet ist, wobei das Fixierungsmittel eine Kette ist und das Innenprofil einzelner Glieder der Kette zum formschlüssigen, bereichsweise Umfassen der Mantelfläche der Mehrkantköpfe ausgebildet ist, wobei das Fixierungsmittel mindestens ein reversibles Verbindungsmittel zum widerlösbaren Zusammenfügen zweier Enden des Fixierungsmittels umfasst,

Nachteilig bei diesen Fixiereinrichtungen ist, dass sie gegen ein ungewolltes Lösen der Verbindung zwischen den zu verbindenden beabstandeten Enden des Fixierungsmittels der Kette und mithin gegen ein Lösen der Fixiereinrichtung von Flanschen oder dergleichen gearteten Verbindungsteilen nicht gesichert ist.

Die Anwendung der Fixiereinrichtungen stellt somit enorme Sicherheitsrisiken für Anwender sowie auch im Bereich der Einrichtung tätige Personen dar, da diese aufgrund ihrer Größe und des Gewichts im Falle des Lösens der Verbindung ernsthafte Verletzungen hervorrufen kann.

Die JP S57 136016 U offenbart eine Fixiereinrichtung in Form einer Spannvorrichtung, welche ein Lösen der Muttern von Flanschen wirksame verhindern soll. Diese Fixiereinrichtung betrifft jedoch kein Sicherungsmittel, welches umlaufend an der Fixiereinrichtung entlang verläuft und ist somit für ein ungewolltes Lösen der Verbindung zwischen den zu verbindenden beabstandeten Enden des Fixierungsmittels der Kette und gegen ein Lösen der Fixiereinrichtung von Flanschen oder dergleichen gearteten Verbindungsteilen nicht geeignet.

### Darstellung der Erfindung

Der vorliegenden Erfindung liegt die Aufgabe zu Grunde, eine Fixiereinrichtung zu schaffen, welche die vorgenannten Probleme ausräumt und ein unbeabsichtigtes Lösen der Fixiereinrichtung von einem Flansch oder einem dergleichen gearteten Verbindungsteil von vornherein sicher ausschließt.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen der erfindungsgemäßen Fixiereinrichtung sind in den abhängigen Unteransprüchen angegeben.

Erfindungsgemäß ist eine Fixiereinrichtung der eingangs genannten Art dadurch gekennzeichnet, dass ein flexibles Sicherungsmittel vorgesehen ist, welches umlaufend an der Fixierungseinrichtung entlang verläuft, wobei mindestens zwei Enden des Sicherungsmittels reversibel miteinander verbindbar sind.

Das Sicherungsmittel liegt vorzugsweise umlaufend an den Gliedern der Fixiereinrichtung an und/oder an den Abstandsgliedern, welche zwischen den Gliedern vorgesehen sind und deren Länge im Wesentlichen dem Abstand der Verbindungsmittel entspricht.

Durch die umlaufende Fixierung der einzelnen Glieder bzw. Abstandsglieder oder anderer mittels eines flexiblen Sicherungsmittels umlaufend sicherbarer Bauteile der Fixiereinrichtung kann diese ein unbeabsichtigtes Lösen der Fixiereinrichtung von einem Flansch oder einem dergleichen georteten Verbindungsteil von vornherein sicher ausschließen. So verhindert bspw. beim Reißen der Fixierungseinrichtung das Sicherungsmittel, welches vorteilhafterweise ein Drahtseil ist, ein unkontrolliertes Umherschlagen der Fixierungseinrichtung. Somit wird das Gefährdungspotential für Personen und in der Nähe befindliche Maschinen und Geräte auf ein Minimum reduziert.

### Kurzbeschreibung der Zeichnungen

Weitere Ziele, Merkmale, Vorteile und Anwendungsmöglichkeiten der erfindungsgemäßen Fixiereinrichtung ergeben sich aus der nachfolgenden Beschreibung eines Ausführungsbeispiels anhand der Zeichnungen. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

In den Zeichnungen zeigen
Fig.1 die erfindungsgemäße Fixiereinrichtung in perspektivischer Schnittansicht an einer Flanschverbindung,
Fig.2 das Fixierungsmittel in der Schnittansicht,
Fig.3 das Fixierungsmittel in der Draufsicht mit vorderen Seitengliedern;
Fig.4 die erfindungsgemäße Fixiereinrichtung an einem Flansch in einer weiteren Ausführungsform in perspektivischen Ansicht;
Fig.5 eine perspektivische Rück-Detailansicht der Fixiereinrichtung wie in Fig.4 dargestellt.

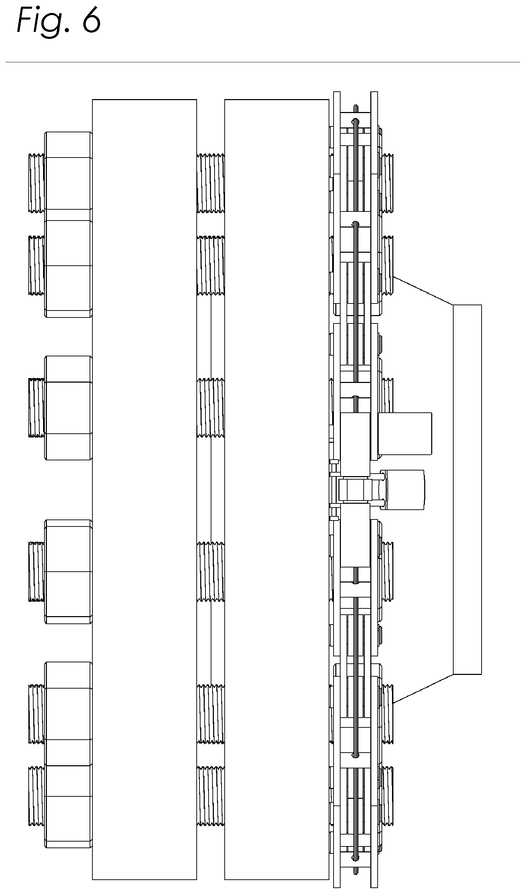

Fig.6 eine Draufsicht von oben der Fixiereinrichtung an einer Flanschverbindung dargestellt.

### Ausführung der Erfindung

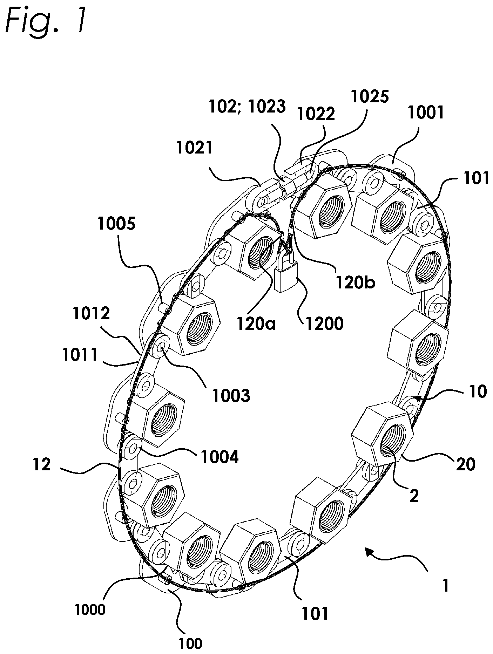

Wie aus Fig.1 ersichtlich, ist das Fixierungsmittel 10 vorzugsweise eine Kette 10, wobei das Innenprofil einzelner Glieder 100 der Kette 10 zum formschlüssigen, bereichsweise Umfassen der Mantelfläche der Mehrkantköpfe 20 ausgebildet ist. Zwischen den Gliedern 100 sind besonders vorteilhaft Abstandsglieder 101 vorgesehen, deren Länge im Wesentlichen dem Abstand der Verbindungsmittel 2 entspricht. Um eine exakte Positionierung und einen idealen Halt des Fixierungsmittels 10 zu erreichen, sind die Seitenglieder 1001 vorzugsweise derart ausgebildet, dass sie im Wesentlichen flächig an dem Flansch 3 anliegen.

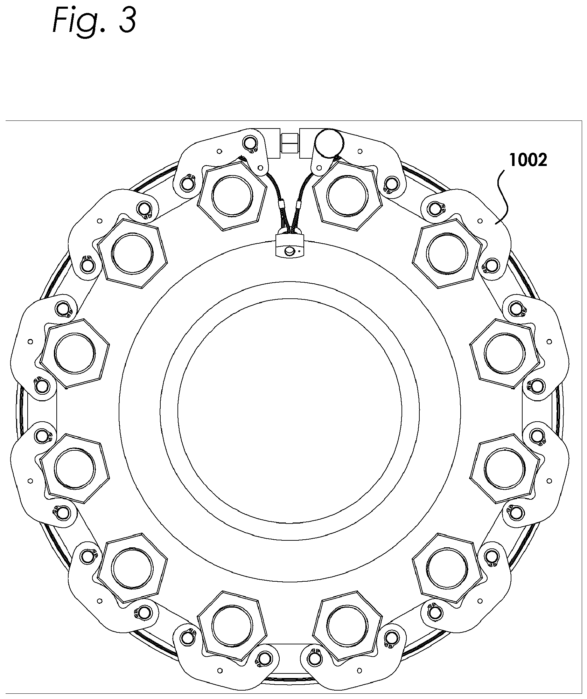

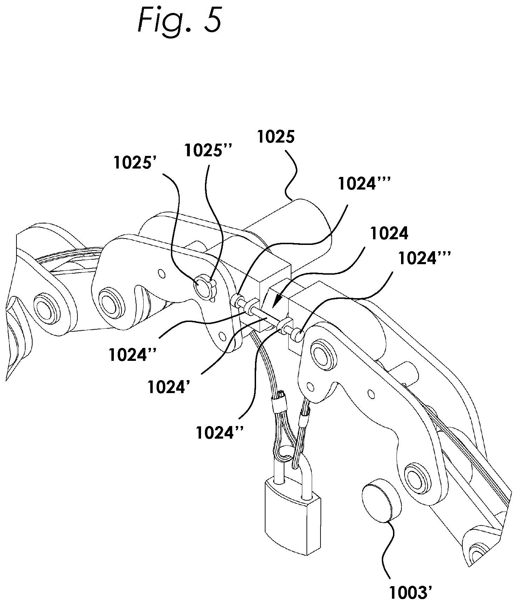

Wie aus den Fign.1-3 ersichtlich, sind die Glieder 100 aus mindestens einem Seitenglied 1001, vorzugsweise zwei parallel angeordneten Seitengliedern 1001, 1002 (Fig.3) und mindestens einem die Seitenglieder 1001, 1002 der Glieder 100 miteinander verbindenden Verbindungsbolzen 1003 gebildet. Wie aus Fig.5 ersichtlich, sind in die Verbindungsbolzen 1003 einseitig Neodym-Magnete integriert (Sacklochbohrung). Somit wird die Kette 10 an den Flansch 3 konstant anliegen. Dadurch ist auch das Anbringen der Kette 10 über Kopf (vertikal) möglich und vereinfacht das Verschrauben von senkrechten Flanschverbindungen ist somit auch möglich.

Wie aus Fig.5 ersichtlich, sind die Verbindungsbolzen 1003 vorteilhafterweise mit einer Kappe 1003' versehen, um den integrierten Magneten u.a. gegen Verschmutzung zu schützen. Hauptsächlich dient diese Kappe 1003' dazu, Korrosion bei unterschiedlichen Metallen zu verhindern. D.h., wenn ein unlackierter Flansch 3 aus einer unedleren Legierung als der Verbindungsbolzen 1003 besteht, wird das Material dort anfangen zu korrodieren (rosten). Wenn eine Kette 10 langfristig zur Schraubensicherung eingesetzt wird, können starke Materialschäden auftreten.

Weiterhin ist es vorteilhaft, die Abstandsglieder 101 aus mindestens zwei im Wesentlichen parallel zueinander angeordneten Seitengliedern 1011, 1012 und mindestens einem die Seitenglieder 1011, 1012 miteinander verbindenden Verbindungsbolzen 1003 zu bilden. Zwischen den Seitengliedern 1001, 1011, 1012 sind vorzugsweise hohlzylindrische Abstandsmittel 1004 angeordnet, durch welche die Verbindungsbolzen 1003 geführt sind, wobei das flexible Sicherungsmittel 12 vorzugsweise an den Verbindungsbolzen 1003 anliegt.

In einer weiteren Ausführungsform der Erfindung umfasst das Fixierungsmittel 10 mindestens ein reversibles Verbindungsmittel 102 zum widerlösbaren Zusammenfügen zweier Enden 103a, 103b des Fixierungsmittels 10. Dieses Verbindungsmittel 102 ist vorzugsweise als Spannmittel und ganz besonders bevorzugt längenverstellbar ausgebildet, wobei das Verbindungsmittel 102 bspw. eine Schraubverbindung ist. Das mindestens eine reversible Verbindungsmittel 102 ist dabei vorteilhaft zum widerlösbaren Zusammenfügen zweier Enden 103a, 103b des Fixierungsmittels 10 aus mindestens zwei Verbinderteilen 1021, 1022 gebildet, welche reversibel miteinander verbindbar sind, wobei die Verbinderteile 1021, 1022 vorzugsweise mittels eines Schnellspannverschlusses 1023 miteinander verbindbar sind. Der Schnellspannverschluss 1023 umfasst vorteilhafterweise zumindest eine Spannschraube 1023, welche die beiden Verbinderteile 1021, 1022 verschraubbar miteinander verbindet.

Durch die herausstehe Kontur (Vergleich zum Konturblech) ist es möglich, das Sicherungsmittel 12 unterhalb des Verbindungsmittels 102 zu verbinden und ermöglicht so ein problemloses Anziehen/Lösen des Verbindungsmittels 102 bzw. das Verschließen der Fixierungseinrichtung 1 bspw. mittels der Schnellspann-Bleche.

Die mindestens zwei Enden 120a, 120b des Sicherungsmittels 12 - in Umfangrichtung gesehen - sind weiterhin vorzugsweise unterhalb des mindestens einen reversiblen Verbindungsmittels 102 zwischen zwei Mehrkantköpfen 20 reversibel miteinander verbunden.

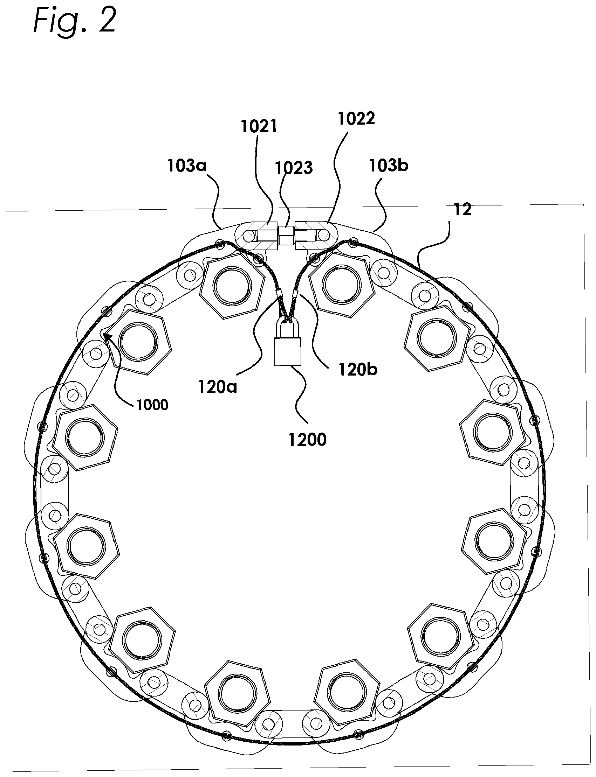

Überdies sind - wie aus Fig.1 und Fig.2 ersichtlich, die mindestens zwei Enden 120a, 120b vorzugsweise mittels eines verschließ- und/oder verriegelbaren Verbindungsmittels 1200 miteinander verbunden.

Zur Führung des Sicherungsmittels 12 sind in einer vorteilhaften Ausführung der Erfindung an den Seitengliedern 1001 stiftartige Fixierungsmittel mit Querbohrung 1005 zur Fixierung des Sicherungsmittels 12 vorgesehen, welche das Herausspringen des Sicherungsmittels 12 von der Fixiereinrichtung 1 verhindert (eingefädelt).

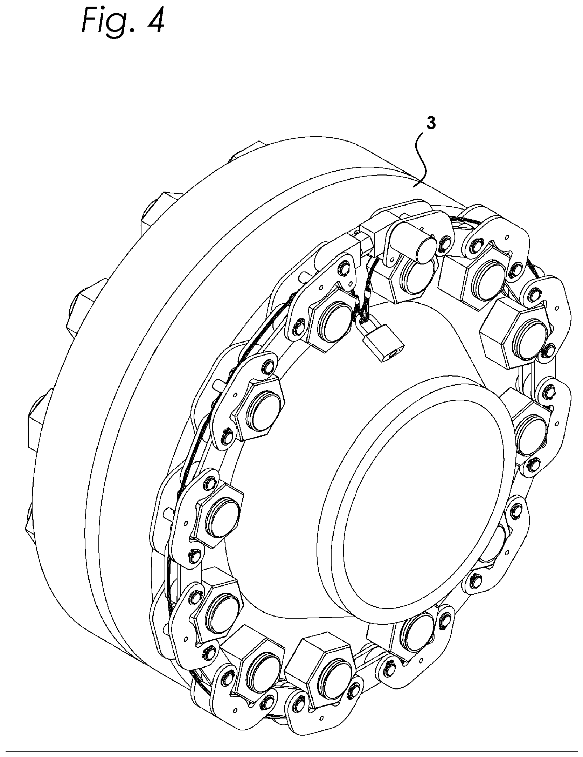

Die Fign.4 und 5 zeigen die erfindungsgemäße Fixiereinrichtung 1 an einem Flansch 3 in einer weiteren vorteilhaften Ausführungsform in jeweils perspektivischen Rückansichten.

Wie aus Fig.5 ersichtlich, ist vorzugsweise eine die beiden beabstandeten Verbindungsteile 1021,1022 auf einen definierten Maximalabstand haltende Verbindungseinrichtung 1024 vorgesehen, welche verhindert, dass beim Aufdrehen des Schnellspannverschlusses 1023 die vorteilhaft vorgesehene Spannschraube 1023 aus den Verbindungsteilen 1021,1022 bzw. den entsprechend vorgesehen Gewinden an den Verbindungsteilen 1021,1022 gedreht wird.

Der Verbindungsbolzen 1024 ist vorteilhaft aus einem bolzen-, stil- oder stangenartigen Verbinderteil 1024' gebildet, welches an Aufnahmen 1024" der Verbindungsteile 1021,1022 verschieblich geführt ist, wobei an den Endseiten des Verbinders 1024' Stopper 1024‴ vorgesehen sind, welche ein Herausgleiten des Verbinders 1024' aus den Aufnahmen 1024" wirksam verhindern.

Dadurch wird wirksam verhindert, dass die Spannschraube 1023 beim Lösen der Verbindung herunterfällt und dabei die Verbindung beschädigt oder die Spannschraube 1023 sogar ganz verloren geht.

Wie aus den Fign.1 bis 5 ferner ersichtlich, ist an dem Schnellspannverschluss 1023 ein das Verbindungsteil 1022 fixierender Steckbolzen 1025 vorgesehen, an dessen Spitze 1025' gemäß den Fing. 4 und 5 ein Absatz angedreht ist, auf den ein Blech 1025" mit einer Nase aufgesetzt bzw. verklebt ist. Durch eine entsprechende Aussparung im Spannblech bzw. am Spannblock kann der Steckbolzen 1025 durchgeführt werden. Durch das Drehen des Steckbolzens 1025 ist ein Herausfallen nun nicht mehr möglich. Die Nullstellung für das Herausziehen ist an der Vorderseite zu erkennen.

Die erfindungsgemäße Fixiereinrichtung 1 beschränkt sich in ihrer Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Fixiereinrichtung
- 2: Verbindungsmittel, Muttern am Flansch
- 3: Flansch
- 10: Fixierungsmittel, Kette
- 12: flexibles Sicherungsmittel
- 20: Mehrkantköpfe
- 100: Glieder
- 101: Abstandsglieder
- 102: reversibles Verbindungsmittel am Fixierungsmittel
- 103a, 103b: Enden des Fixierungsmittels
- 120a, 120b: Enden des Sicherungsmittels
- 1000: Aufnahme
- 1001,1002: Seitenglieder
- 1003: Verbindungsbolzen
- 1003': Kappe an den Verbindungsbolzen
- 1004: Abstandsmittel
- 1005: stiftartige Fixierungsmittel
- 1011,1012: Seitenglieder der Abstandsglieder
- 1021,1022: Verbinderteile
- 1023: Schnellspannverschluss
- 1024: Verbindungseinrichtung
- 1024': bolzen-, stil- oder stangenartiges Verbinderteil
- 1024": Aufnahmen
- 1024‴: Stopper
- 1025: Steckbolzen
- 1025': Spitze am Steckbolzen
- 1025": Blech mit Nase
- 1200: Verbindungsmittel für die Enden des Sicherungsmittels

## Patentansprüche

1. Fixiereinrichtung (1) für Verbindungsmittel (2) mit einem Mehrkantkopf zur lösbaren Verbindung von Flanschen (3), welche durch eine Schraubverbindung miteinander verbindbar und gegeneinander verspannbar sind, wobei die Fixiereinrichtung (1) ein die Mantelfläche der Mehrkantköpfe (20) mehrerer Verbindungsmittel (2) zumindest bereichsweise formschlüssig umfassendes und die Rotation dieser Verbindungsmittel (2) hemmendes Fixierungsmittel (10) umfasst und das Fixierungsmittel (10) mehrere beabstandete Glieder (100) mit jeweils mindestens einer Aufnahme (1000) umfasst, dessen Innenprofil der Mantelfläche der Mehrkantköpfe (20) entsprechend korrespondierend ausgebildet ist, wobei das Fixierungsmittel (10) eine Kette (10) ist und das Innenprofil einzelner Glieder (100) der Kette (10) zum formschlüssigen, bereichsweise Umfassen der Mantelfläche der Mehrkantköpfe (20) ausgebildet ist, wobei das Fixierungsmittel (10) mindestens ein reversibles Verbindungsmittel (102) zum widerlösbaren Zusammenfügen zweier Enden (103a, 103b) des Fixierungsmittels (10) umfasst,
**dadurch gekennzeichnet, dass**
ein flexibles Sicherungsmittel (12) zur Fixierung von Bauteilen der Fixiereinrichtung (1) vorgesehen ist, welches umlaufend an der Fixiereinrichtung (1) entlang verläuft, wobei mindestens zwei Enden (120a, 120b) des Sicherungsmittels (12) reversibel miteinander verbindbar sind.

2. Fixiereinrichtung (1) nach Anspruch 1,
**dadurch gekennzeichnet, dass**
das flexible Sicherungsmittel (12) an den Gliedern (100) der Fixiereinrichtung (1) anliegt.

3. Fixiereinrichtung (1) nach Anspruch 1, wobei zwischen den Gliedern (100) Abstandsglieder (101) vorgesehen sind, deren Länge im Wesentlichen dem Abstand der Verbindungsmittel (2) entspricht,
**dadurch gekennzeichnet, dass**
das flexible Sicherungsmittel (12) an Abstandsgliedern (101) anliegt.

4. Fixiereinrichtung (1) nach Anspruch 3, wobei die Glieder (100) aus jeweils mindestens einem Seitenglied (1001, 1002) und mindestens einem die Seitenglieder (1001, 1002) der Glieder (100) miteinander verbindenden Verbindungsbolzen (1003) gebildet sind und die Abstandsglieder (101) aus mindestens zwei im Wesentlichen parallel zueinander angeordnete Seitengliedern (1011, 1012) und mindestens einem die Seitenglieder (1011, 1012) miteinander verbindenden Verbindungsbolzen (1003) gebildet sind,
**dadurch gekennzeichnet, dass**
das flexible Sicherungsmittel (12) an den Verbindungsbolzen (1003) anliegt.

5. Fixiereinrichtung (1) nach Anspruch 4,
**dadurch gekennzeichnet, dass**
an den Seitengliedern (1001, 1002) stiftartige Fixierungsmittel (1005) zur Fixierung des Sicherungsmittels (12) vorgesehen sind.

6. Fixiereinrichtung (1) nach einem der vorangegangenen Ansprüche,
**dadurch gekennzeichnet, dass**
das mindestens eine reversible Verbindungsmittel (102) zum widerlösbaren Zusammenfügen zweier Enden (103a, 103b) des Fixierungsmittels (10) aus mindestens zwei Verbinderteilen (1021, 1022) gebildet ist, welche reversibel miteinander verbindbar sind.

7. Fixiereinrichtung (1) nach Anspruch 6,
**dadurch gekennzeichnet, dass**
die mindestens zwei Enden (120a, 120b) des Sicherungsmittels (12) - in Umfangrichtung gesehen zwischen zwei Mehrkantköpfen (20) reversibel miteinander verbunden sind.

8. Fixiereinrichtung (1) nach Anspruch 7,
**dadurch gekennzeichnet, dass**
die mindestens zwei Enden (120a, 120b) mittels eines verschließ- und/oder verriegelbaren Verbindungsmittels (1200) miteinander verbunden sind.

9. Fixiereinrichtung (1) nach einem der vorangegangenen Ansprüche 6 bis 8,
**dadurch gekennzeichnet, dass**
die Verbinderteile (1021, 1022) mittels eines Schnellspannverschlusses (1023) miteinander verbindbar sind.

10. Fixiereinrichtung (1) nach einem der vorangegangenen Ansprüche,
**dadurch gekennzeichnet, dass**
in die Verbindungsbolzen (1003) einseitig Neodym-Magnete integriert sind.

11. Fixiereinrichtung (1) nach einem der vorangegangenen Ansprüche,
**dadurch gekennzeichnet, dass**
die Verbindungsbolzen (1003) mit einer Kappe (1003') versehen sind.

12. Fixiereinrichtung (1) nach einem der vorangegangenen Ansprüche,
**dadurch gekennzeichnet, dass**
der Schnellspannverschluss (1023) zumindest eine Spannschraube (1023) umfasst, welche die beiden Verbinderteile (1021, 1022) verschraubbar miteinander verbindet.

13. Fixiereinrichtung (1) nach Anspruch 12,
**dadurch gekennzeichnet, dass**
eine die beiden beabstandeten Verbindungsteile (1021,1022) auf einen definierten Maximalabstand haltende Verbindungseinrichtung (1024) vorgesehen ist, welche verhindert, dass beim Aufdrehen des Schnellspannverschlusses (1023) die Spannschraube (1023) aus den Verbindungsteilen (1021,1022) bzw. den entsprechend vorgesehen Gewinden an den Verbindungsteilen (1021,1022) gedreht wird.

14. Fixiereinrichtung (1) nach Anspruch 13,
**dadurch gekennzeichnet, dass**
der Verbindungsbolzen (1024) aus einem bolzen-, stil- oder stangenartigen Verbinderteil (1024') gebildet ist, welches an Aufnahmen 1024" der Verbindungsteile 1021,1022 verschieblich geführt ist, wobei an den Endseiten des Verbinders 1024' Stopper 1024‴ vorgesehen sind, welche ein Herausgleiten des Verbinders 1024' aus den Aufnahmen 1024" wirksam verhindern.

15. Fixiereinrichtung (1) nach einem der vorangegangenen Ansprüche,
**dadurch gekennzeichnet, dass**
an dem Schnellspannverschluss (1023) ein das Verbindungsteil (1022) fixierender Steckbolzen (1025) vorgesehen ist, an dessen Spitze (1025') ein Absatz angedreht ist, auf den ein Blech (1025") mit einer Nase aufgesetzt bzw. verklebt ist.

## Claims

1. Fixing device (1) for connecting means (2) with a polygonal head for the detachable connection of flanges (3), which can be connected to one another and braced against one another by a screw connection, the fixing device (1) integrating the outer surface of the polygonal heads (20) of several connecting means (2 ) at least partially encompassing a form-fitting and the rotation of these connecting means (2) inhibiting fixation means (10) and the fixation means (10) comprises a plurality of spaced apart members (100) each with at least one receptacle (1000), the inner profile of the lateral surface of the polygonal heads (20) is designed in a correspondingly corresponding manner, the fixing means (10) being a chain (10) and the inner profile of individual links (100) of the chain (10) being designed to encompass the outer surface of the polygonal heads (20) in a form-fitting manner, the fixing means (10 ) at least one reversible connecting means (102) for detachable joining of two ends (103a, 103b) of the fixing means (10),#
characterized in that#
a flexible securing means (12) for fixing components of the fixing device (1) is provided, which runs circumferentially along the fixing device (1), whereby at least two ends (120a, 120b) of the securing means (12) being reversibly connectable to one another.#

2. Fixing device (1) according to claim 1,#
characterized in that#
the flexible securing means (12) rests on the links (100) of the fixing device (1).#

3. Fixing device (1) according to claim 1,#
whereby spacer members (101) are provided between the members (100), the length of which essentially corresponds to the distance between the connecting means (2),#
characterized in that#
the flexible securing means (12) rests against spacers (101).#

4. Fixing device (1), according to claim 3,#
whereby the links (100) are each formed from at least one side link (1001, 1002) and at least one connecting bolt (1003) connecting the side links (1001, 1002) of the links (100) to one another, and the spacer links (101) are essentially formed by at least two side members (1011, 1012) arranged parallel to one another and at least one connecting bolt (1003) connecting the side members (1011, 1012) to one another are formed,#
characterized in that#
the flexible securing means (12) rests against the connecting bolt (1003).#

5. Fixing device (1) according to claim 4,#
characterized in that#
pin-like fixing means (1005) for fixing the securing means (12) are provided on the side members (1001, 1002).#

6. Fixing device (1) **characterized by** any of the preceding claims,#
characterized in that#
the at least one reversible connecting means (102) for the releasable joining of two ends (103a, 103b) of the fixing means (10) is formed by at least two connector parts (1021, 1022) which can be reversibly connected to one another. #

7. Fixing device (1) according to claim 6,#
characterized in that#
the at least two ends (120a, 120b) of the securing means (12) - seen in the circumferential direction, are reversibly connected to one another between two polygonal heads (20).#

8. Fixing device (1) according to claim 7,#
characterized in that#
the at least two ends (120a, 120b) are connected to one another by means of a lockable and / or latchable connecting means (1200).#

9. Fixing device (1) **characterized by** any of the preceding claims 6 bis 8,#
characterized in that#
the connector parts (1021, 1022) can be connected to one another by means of a quick release fastener (1023).#

10. Fixing device (1) **characterized by** any of the preceding claims,#
characterized in that#
neodymium magnets are integrated into the connecting bolts (1003) on one side.#

11. Fixing device (1) **characterized by** any of the preceding claims,#
characterized in that#
the connecting bolts (1003) are fitted with a cap (1003 ').#

12. Fixing device (1) **characterized by** any of the preceding claims,#
characterized in that#
the quick release fastener (1023) comprises at least one clamping screw (1023) which connects the two connector parts (1021, 1022) to one another in a screwable manner.#

13. Fixing device (1) according to claim 12,#
characterized in that#
a connecting device (1024) is provided which keeps the two connecting parts (1021, 1022) spaced at a defined maximum distance to prevent rotating of the clamping screw (1023) and removal from the connecting parts (1021, 1022) or the respective provided threads on the connecting parts (1021, 1022).#

14. Fixing device (1) according to claim 13,#
characterized in that#
the connecting bolt (1024) is formed from a bolt, style or rod-like connector part (1024′) which is slidably guided on receptacles 1024" of the connecting parts (1021, 1022), whereby on the end sides of the connector 1024' stoppers 1024‴ are provided which effectively prevent the connector 1024' from sliding out of the receptacles 1024".#

15. Fixing device (1) **characterized by** any of the preceding claims,#
characterized in that#
a socket pin (1025) is provided on the quick release fastener (1023) that fixes the connecting part (1022), at the tip (1025') of which a shoulder is turned, onto which a metal sheet with a nose (1025") is fitted or glued.#

## Revendications

1. Dispositif de fixation (1) pour des moyens de liaison (2) avec une tête polygonale pour la liaison amovible de brides (3) qui peuvent être reliées entre elles et serrées les unes contre les autres par une liaison par vis, le dispositif de fixation (1) comprenant un moyen de fixation (10) entourant par complémentarité de forme au moins par zones de la surface d'enveloppe des têtes polygonales (20) de plusieurs moyens de liaison (2) et empêchant la rotation de ces moyens de liaison (2), et le moyen de fixation (10) comprenant plusieurs éléments (100) espacés les uns des autres et comportant chacun au moins un logement (1000), dont le profil intérieur est réalisé de manière à correspondre à la surface d'enveloppe des têtes polygonales (20), le moyen de fixation (10) étant une chaîne (10) et le profil intérieur de maillons individuels (100) de la chaîne (10) étant réalisé pour entourer par complémentarité de forme et par zones la surface d'enveloppe des têtes polygonales (20), le moyen de fixation (10) comprenant au moins un moyen de liaison réversible (102) pour assembler de manière amovible deux extrémités (103a, 103b) du moyen de fixation (10),
**caractérisé en ce qu'**
un moyen de fixation flexible (12) est prévu pour fixer des composants du dispositif de fixation (1), lequel s'étend de manière périphérique le long du dispositif de fixation (1), au moins deux extrémités (120a, 120b) du moyen de fixation (12) pouvant être reliée entre elles de manière réversible.

2. Dispositif de fixation (1) selon la revendication 1,
**caractérisé en ce que**
le moyen de fixation flexible (12) est en contact avec les maillons (100) du dispositif de fixation (1).

3. Dispositif de fixation (1) selon la revendication 1, dans lequel des éléments d'écartement (101) sont prévus entre les maillons (100), dont la longueur correspond sensiblement à l'écartement des moyens de liaison (2), **caractérisé en ce que**
le moyen de fixation flexible (12) est en contact avec des éléments d'écartement (101).

4. Dispositif de fixation (1) selon la revendication 3, dans lequel les éléments (100) sont formés chacun d'au moins un élément latéral (1001, 1002) et d'au moins un boulon de liaison (1003) reliant entre eux les éléments latéraux (1001, 1002) des éléments (100), et les éléments d'écartement (101) sont formés d'au moins deux éléments latéraux (1011, 1012) disposés sensiblement parallèlement entre eux et d'au moins un boulon de liaison (1003) reliant entre eux les éléments latéraux (1011, 1012),
**caractérisé en ce que**
le moyen de fixation flexible (12) est en contact avec les boulons de liaison (1003).

5. Dispositif de fixation (1) selon la revendication 4,
**caractérisé en ce que**
des moyens de fixation (1005) en forme de goupille sont prévus sur les éléments latéraux (1001, 1002) pour fixer le moyen de sécurité (12).

6. Dispositif de fixation (1) selon l'une des revendications précédentes,
**caractérisé en ce qu'**
au moins un moyen de liaison réversible (102) pour assembler de manière réversible deux extrémités (103a, 103b) du moyen de fixation (10) est formé d'au moins deux parties de connecteur (1021, 1022) qui peuvent être reliées entre elles de manière réversible.

7. Dispositif de fixation (1) selon la revendication 6,
**caractérisé en ce qu'**
au moins deux extrémités (120a, 120b) du moyen de sécurité (12) - vu dans la direction périphérique - sont reliées entre elles de manière réversible entre deux têtes polygonales (20).

8. Dispositif de fixation (1) selon la revendication 7,
**caractérisé en ce qu'**
au moins deux extrémités (120a, 120b) sont reliées entre elles au moyen d'un moyen de liaison (1200) pouvant être fermé et/ou verrouillé.

9. Dispositif de fixation (1) selon l'une des revendications précédentes 6 à 8,
**caractérisé en ce que**
les parties de connecteur (1021, 1022) peuvent être reliées l'une à l'autre au moyen d'une fermeture à serrage rapide (1023).

10. Dispositif de fixation (1) selon l'une des revendications précédentes,
**caractérisé en ce que**
des aimants en néodyme sont intégrés d'un côté dans les boulons de liaison (1003).

11. Dispositif de fixation (1) selon l'une des revendications précédentes,
**caractérisé en ce que**
les boulons de liaison (1003) sont pourvus d'un capuchon (1003').

12. Dispositif de fixation (1) selon l'une des revendications précédentes,
**caractérisé en ce que**
la fermeture à serrage rapide (1023) comprend au moins une vis de serrage (1023) qui relie les deux parties de connecteur (1021, 1022) entre elles par vissage.

13. Dispositif de fixation (1) selon la revendication 12,
**caractérisé en ce qu'**
il est prévu un dispositif de liaison (1024) maintenant les deux pièces de liaison (1021, 1022) espacées à une distance maximale définie, qui empêche que, lors du dévissage de la fermeture à serrage rapide (1023), la vis de serrage (1023) soit tournée hors des pièces de liaison (1021, 1022) ou des filetages prévus en conséquence sur les pièces de liaison (1021, 1022).

14. Dispositif de fixation (1) selon la revendication 13,
**caractérisé en ce que**
le boulon de liaison (1024) est formé d'une pièce de liaison (1024') en forme de boulon, de tige ou de barre, qui est guidée de manière coulissante sur des logements 1024" des pièces de liaison 1021, 1022, des butées 1024‴ étant prévues sur les côtés d'extrémité du connecteur 1024', qui empêchent efficacement un glissement du connecteur 1024' hors des logements 1024".

15. Dispositif de fixation (1) selon l'une des revendications précédentes,
**caractérisé en ce que**
sur la fermeture à serrage rapide (1023), il est prévu un boulon enfichable (1025) fixant la pièce de liaison (1022), à la pointe duquel (1025') est vissé un épaulement sur lequel est posée ou collée une tôle (1025") avec un nez.
